(19) Europäisches Patentamt
European Patent Office
Office européen des brevets

(11) Veröffentlichungsnummer: **0 001 436**
**B1**

(12) # EUROPÄISCHE PATENTSCHRIFT

(45) Veröffentlichungstag der Patentschrift: **23.09.81**

(21) Anmeldenummer: **78101017.8**

(22) Anmeldetag: **28.09.78**

(51) Int. Cl.³: **C 08 G 73/02,** C 07 C 87/20 // C02F1/54, C08G59/50, C10M1/32

(54) **Verfahren zur Herstellung von Polyalkylenpolyaminen.**

(30) Priorität: **06.10.77 DE 2744982**

(43) Veröffentlichungstag der Anmeldung: **18.04.79 Patentblatt 79/8**

(45) Bekanntmachung des Hinweises auf die Patenterteilung: **23.09.81 Patentblatt 81/38**

(84) Benannte Vertragsstaaten: **BE CH DE FR GB NL SE**

(56) Entgegenhaltungen:
**FR-A-2 313 415**
**GB-A-1 418 302**

(73) Patentinhaber: **BASF Aktiengesellschaft, Carl-Bosch-Strasse 38, D-6700 Ludwigshafen (DE)**

(72) Erfinder: **Mueller, Hans, Dr., Mohnstrasse 54, D-6700 Ludwigshafen (DE)**
Erfinder: **Wulz, Klaus, Dr., Ungsteiner Strasse 22, D-6700 Ludwigshafen (DE)**
Erfinder: **Beyer, Karl-Heinz, Dr., Knietschstrasse 6, D-6710 Frankenthal (DE)**
Erfinder: **Streit, Werner, Dr., Im Woogtal 11, D-6719 Bobenheim (DE)**

EP 0 001 436 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur Herstellung von Polyalkylenpolyaminen

Die Erfindung betrifft ein Verfahren zur Herstellung von Polyalkylenpolyaminen durch Umsetzung von primären oder sekundären Aminen mit Verbindungen der Formel

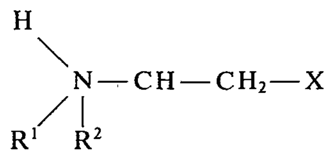

(I)

in der

X = $-Cl$, $-Br$ oder $-OSO_3H$,
$R^1$, $R^2$ = H oder einen gesättigten Alkylrest mit 1 bis 4 C-Atomen bedeuten,

und, bezogen auf die Verbindungen der Formel I, mit mindestens stöchiometrischen Mengen an Basen in wäßriger Lösung.

Es ist bekannt, primäre und sekundäre Amine mit Äthylenimin zu Polyalkylenpolyaminen umzusetzen. Nach den Angaben von J. Rabinowitz in Helvetica Chimica Acta 55, Nr. 112, Seiten 1104 bis 1110 (1972) erhitzt man ein Amin in wäßriger Lösung oder einem Lösungsmittelgemisch aus Wasser und einem Alkohol zusammen mit 2-Aminoäthylschwefelsäureester und Natronlauge. Dabei bildet sich intermediär Äthylenimin, das mit dem Amin zu polyaminoalkyliertem Amin weiterreagiert. Das Reaktionsgemisch besteht im wesentlichen aus Natriumsulfat, gesättigter wäßriger bzw. alkoholisch-wäßriger Natriumsulfatlösung und darin gelöstem polyaminoalkyliertem Amin. Um das polyaminoalkylierte Amin zu gewinnen, wird das Reaktionsgemisch zunächst im Vakuum auf das halbe Volumen eingedampft, zur möglichst vollständigen Abscheidung des gelösten Natriumsulfats mit Alkohol versetzt und filtriert. Man erhält so eine wäßrig-alkoholische Lösung des polyaminoalkylierten Amins, die durch Destillation in die Bestandteile getrennt werden kann. Dieses Verfahren ist technisch umständlich, weil der Alkohol mit Hilfe einer Destillation entfernt werden muß und Verluste an polyaminoalkyliertem Amin und Alkohol durch die Entfernung des Natriumsulfatrückstands auftreten.

Aus der GB-PS 1 418 302 ist ein Verfahren zur Herstellung von Polyalkylenpolyaminderivaten bekannt, bei dem man primäre oder sekundäre Amine, die in $\alpha$- oder $\beta$-Stellung eine Carboxyl-, Hydroxyl- oder Phosphorsäureestergruppe tragen, mit einem Aminoalkylester der Schwefelsäure in Gegenwart von Alkalimetallhydroxiden umsetzt. Die Reaktionsprodukte werden isoliert, indem man einen Teil des Reaktionsmediums verdampft, dann einen Alkohol hinzufügt, um Natriumsulfat zu entfernen und anschließend eine Destillation vornimmt.

Der Erfindung liegt die Aufgabe zugrunde, das eingangs beschriebene Verfahren, insbesondere die Aufarbeitung des Reaktionsgemisches, zu vereinfachen. Eine weitere Aufgabe der Erfindung ist es, die Raum-Zeit-Ausbeute bei diesem Verfahren zu erhöhen.

Die Aufgabe wird erfindungsgemäß dadurch gelöst, daß man 15 bis 45%ige wäßrige Lösungen von Alkali- oder Erdalkalihydroxiden einsetzt, die Reaktion bei Temperaturen von 60 bis 200°C durchführt, das Reaktionsgemisch unter Mischen auf eine Temperatur abkühlt, bei der sich zwei Phasen ausbilden und die obere, Polyalkylenpolyamine enthaltende Phase abtrennt. Es ist besonders vorteilhaft, wenn die wäßrigen Lösungen der Alkali- oder Erdalkalihydroxide mit Natriumsulfat gesättigt sind.

Eine beträchtliche Erhöhung der Reaktionsgeschwindigkeit wird dadurch erreicht, daß man die Umsetzung in Gegenwart von Verbindungen vornimmt, die im pH-Bereich von 9 bis 14 mit Alkyleniminen reagieren, z. B. Alkyl- und Arylhalogenide sowie OH-Gruppen enthaltende Verbindungen, wie Alkohole, Aminoalkohole, Harnstoff und Hydroxylamin. Es handelt sich bei diesen Verbindungen um Stoffe, die bei der Polymerisation von reinem Äthylenimin als Polymerisationsinitiator verwendet werden.

Alle primären und sekundären Amine können nach dem erfindungsgemäßen Verfahren polyaminoalkyliert werden. Die Reaktion am Beispiel eines primären Amins und 2-Aminoäthylschwefelsäureester kann schematisch mit Hilfe folgender Gleichung beschrieben werden:

$$R-NH_2 + n\text{-}H_2N-CH_2CH_2OSO_3H + 2n\text{-}NaOH$$

$$\longrightarrow R-NH(CH_2CH_2NH)_nH + n\text{-}Na_2SO_4 + 2n\text{-}H_2O \quad (1)$$

Man erhält ein Reaktionsgemisch, bei dem das Natriumsulfat als gesättigte wäßrige Lösung und als fester Bodenkörper vorliegt sowie polyaminoalkyliertes Amin des Aminoalkylierungsgrades n. Der Aminoalkylierungsgrad n beträgt vorzugsweise mindestens 2.

Der Alkylierungsgrad wird durch das Verhältnis von Amin zu 2-Aminoäthylschwefelsäureester und Natronlauge eingestellt. Wie aus der Gleichung 1 hervorgeht, verwendet man pro Mol einer

Verbindung der Formel I zwei Mol einer einwertigen Base. So bildet sich beispielsweise aus 2-Aminoäthylschwefelsäureester und Natronlauge zunächst Äthylenimin und Natriumsulfat. Das Äthylenimin ist mit $\gamma$-4-Nitrobenzylpyridin nachweisbar. Um Alkylenimine aus den Verbindungen der Formel I zu erhalten, benötigt man mindestens die stöchiometrische Menge an Base gemäß Gleichung 1. Ein Überschuß an Base ist nicht erforderlich, kann jedoch eingesetzt werden, z. B. kann man auf 1 Mol einer Verbindung der Formel I 2,5 bis 3 Äquivalente an Base einsetzen.

Die intermediär entstehenden Alkylenimine können als sekundäre Amine der Polyaminalkylierung unterworfen werden. Es ist nicht erforderlich, die Umsetzung von Alkyleniminen in Gegenwart sekundärer oder primärer Amine durchzuführen.

Geeignete Amine, die nach dem erfindungsgemäßen Verfahren der Aminoalkylierung unterworfen werden können, sind beispielsweise Verbindungen der Formel

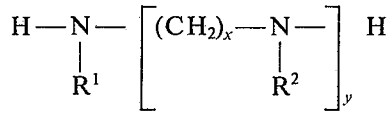

in der x die Werte 0 bis 6 und y eine ganze Zahl von 1 bis 500 sein kann, $R^1$ Wasserstoff, eine Hydroxyl-, Alkyl-, Aryl-, Hydroxyäthyl-, Hydroxypropyl-, Aminoäthyl-, Aminopropyl- oder eine substituierte oder unsubstituierte Aminogruppe ist und $R^2$ ebenfalls einen Substituenten der für $R^1$ angeführten Art außer der Hydroxylgruppe bedeutet. Amine dieser Art sind beispieslweise N-Aminoäthyl-1,2-diaminoäthan; N-Aminopropyl-1,2-diaminoäthan, N,N'-Bis(aminoäthyl)-1,2-diaminoäthan, N,N'-Bis-(aminopropyl)-1,2-diaminoäthan, Äthylendiamin, Bis-hydroxyäthylendiamin, Hydroxyäthyldiäthylentriamin, Diäthylentriamin, Triäthylentetraamin, Hydroxylamin und Hydrazin sowie deren Derivate, Harnstoff und Harnstoffderivate, die mindestens eine NH-Gruppe aufweisen, primäre und sekundäre aliphatische und aromatische Amine, Hexamethylendiamin, Bis-(hexamethylen)-triamin, Äthanolamin und Carbonsäureamide.

Außer den genannten Verbindungen kommen primäre und sekundäre aliphatische und aromatische Amine in Betracht, beispielsweise Methylamin, Äthylamin, Dimethylamin, Stearylamin, Oleylamin, Anilin und substituierte Aniline sowie heterocyclische Verbindungen wie Piperazin, Aminoäthyl- und Aminopropylpiperazin, Imidazolin, Pyrazolin und Äthylenimin.

Die in Betracht kommenden Amine werden mit Verbindungen der Formel

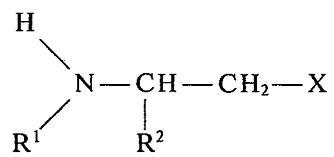
(I)

umgesetzt. Als Verbindungen der Formel I verwendet man vorzugsweise 2-Aminoäthylschwefelsäureester und Verbindungen, in der der Substituent X ein Chloratom bedeutet und die Substituenten $R^1$, $R^2$ für ein Wasserstoffatom stehen.

Als Alkali- oder Erdalkalihydroxide werden bei dem erfindungsgemäßen Verfahren Lithiumhydroxid, Natriumhydroxid, Kaliumhydroxid, Magnesiumhydroxid, Kalziumhydroxid, Bariumhydroxid und Strontiumhydroxid oder Mischungen davon verwendet. Man kann jedoch auch die entsprechenden Oxide verwenden, die bekanntlich in wäßriger Lösung in die Hydroxide übergehen. Die Formulierung Alkalihydroxide umfaßt jedoch nicht diejenigen Basen, die sich von Ammoniak oder Derivaten des Ammoniaks ableiten. Vorzugsweise verwendet man als Base jedoch Natriumhydroxid und Kaliumhydroxid oder Mischungen aus Natriumhydroxid und Ätzkalk.

Kennzeichnend für das erfindungsgemäße Verfahren ist, daß man 15 bis 45%ige wäßrige Lösungen der Alkali- oder Erdalkalihydroxide einsetzt. Verwendet man beispielsweise 10%ige oder 50%ige wäßrige Natronlauge, so tritt zwar auch eine Polyaminoalkylierung der Amine ein, jedoch trennt sich das Reaktionsgemisch nach der Umsetzung nicht in zwei wäßrige Phasen. Die Ausbildung dieser beiden wäßrigen Phasen ist jedoch ein entscheidendes Merkmal der vorliegenden Erfindung. Die Umsetzung der Reaktanten erfolgt bei Temperaturen von 60 bis 200° C. Vorzugsweise führt man die Reaktion beim Siedepunkt des Reaktionsgemisches unter Rückflußsieden durch. Um die Reaktion zu beschleunigen ist es möglich, bei höheren Temperaturen unter Druck zu arbeiten. Der Siedepunkt des Reaktionsgemisches liegt im allgemeinen in dem Temperaturbereich von 80 bis 110° C.

Die Reaktionszeit beträgt etwa 30 bis 100 Stunden. Sie ist vom eingesetzten Amin, der Reaktivität des sich intermediär bildenden Alkyleniminderivats und der Konzentration der Base abhängig. Das sich intermediär bildende Alkylenimin wird nach Maßgabe seiner Entstehung bei der Umsetzung verbraucht, so daß im Reaktionsgemisch stets nur eine geringe Iminkonzentration vorliegt. Die Reaktion ist beendet, sobald mit $\gamma$-4-Nitrobenzylpyridin kein Aziridinring mehr nachzuweisen ist.

Während der Umsetzung wird für eine gute Durchmischung der einzelnen Komponenten gesorgt, z. B. wird die Mischung gerührt, zum Sieden erhitzt oder es wird ein Inertgas durchgeleitet. Nachdem

kein Alkylenimin mehr nachweisbar ist, wird das Reaktionsgemisch abgekühlt. Hierbei ist es vorteilhaft, daß es weiterhin gemischt wird, damit sich das anorganische Salz in gut filtrierbarer Form abscheidet. Das Reaktionsgemisch wird mindestens auf eine Temperatur abgekühlt, bei der sich zwei Phasen ausbilden. Diese Temperatur kann leicht ermittelt werden, indem man beispielsweise dem Reaktionsgemisch eine Probe entnimmt und prüft, bei welcher Temperatur sie sich in zwei Phasen trennt. Wie bereits ausgeführt empfiehlt es sich, das Reaktionsgemisch während des Abkühlens in Bewegung zu halten, z. B. durch Rühren, Schütteln, Scheren oder durch Einleiten von Stickstoff.

Sobald das Reaktionsgemisch auf eine Temperatur in dem Bereich abgekühlt ist, bei der sich zwei Phasen bilden, läßt man es sedimentieren. In diesem Stadium darf es selbstverständlich nicht mehr durchmischt werden. Das bei der Reaktion erhaltene Polyalkylenpolyamin ist im wesentlichen in der oberen Phase enthalten, die abgetrennt wird. Ein Teil des Polyalkylenpolyamins ist ebenfalls in der gesättigten wäßrigen Lösung des bei der Reaktion gebildeten anorganischen Salzes enthalten. Auf dem Boden des Gefäßes scheidet sich das anorganische Salz kristallin ab. Es kann leicht abfiltriert werden. Die gesättigte wäßrige Lösung des anorganischen Salzes, die als untere Phase des Reaktionsgemisches erhalten wird, kann bei einer nachfolgenden Umsetzung von Verbindungen der Formel I wiederverwendet werden. Diese Maßnahme hat den Vorteil, daß durch das Abtrennen der unteren wäßrigen Phase praktisch keine Verluste an Polyalkylenpolyaminen auftreten.

Die obere wäßrige Phase enthält 30 bis 50, in der Regel 35 bis 45 Gew.-% Polyalkylenpolyamin sowie 1 bis 2 Gew.-% Natriumsulfat. Für die meisten Anwendungszwecke ist es ausreichend, die abgetrennte wäßrige, Polyalkylenpolyamine enthaltende obere Phase direkt weiterzuverarbeiten, z. B. bei einer weiteren Aminoalkylierungsreaktion einzusetzen oder zur Herstellung von Retentions- und Entwässerungshilfsmitteln für die Papierindustrie oder als Zwischenprodukt für die Herstellung von Flockungsmitteln für Feststoffe in Abwässern zu verwenden. Die erfindungsgemäß hergestellten Polyalkylenpolyamine können nicht destilliert werden, sie sind auch im Hochvakuum bei Temperaturen von 250° C nicht flüchtig.

Überraschenderweise gelingt es, die Umsetzungsgeschwindigkeit wesentlich zu erhöhen, wenn man bei der Aminoalkylierung Verbindungen einsetzt, die im pH-Bereich von 9 bis 14 mit Alkyleniminen reagieren. Diese Verbindungen bilden mit Alkyleniminen Kationen, sie werden teilweise auch als Katalysator bei der Polymerisation des Äthylenimins verwendet. Geeignete Verbindungen dieser Art sind beispielsweise Halogen enthaltende Verbindungen, wie aromatische und aliphatische, gesättigte sowie ungesättigte Kohlenwasserstoffe, z. B. 1,2-Dichloräthan, 1,2-Dichlorpropan, 1,2-Dibromäthan, Methylchlorid, Äthylchlorid, Butylchlorid, Methylenchlorid, tert.-Butylchlorid, Äthyljodid, Vinylchlorid, Propargylchlorid, Chlorbenzol, Chloressigsäure, Acrylchlorid, Benzylchlorid, Benzylbromid, Brombenzol, Halogenäther, wie Chlormethylpropyläther und Chlormethylbutyläther. Zu den Verbindungen, die im pH-Bereich von 9 bis 14 mit Alkyleniminen reagieren, gehören auch OH-Gruppen enthaltende Verbindungen, wie ein- und mehrwertige Alkohole, z. B. Methanol, Äthanol, Propanol, Isopropanol, Butanol, sek.-Butanol, tert.-Butanol, Octanol, Oleylalkohol, Glykol, Butandiol-1,4, Glyzerin, Pentaerythrit, Pentosen, Hexosen, Di- und Polysacharide, Pektine, Polyvinylalkohol, Aminoalkohole, Phenole, Oxysäuren, Hydroxylamin, Harnstoff und Hydrazin sowie deren Derivate.

Zweckmäßigerweise wählt man als Katalysatoren solche Verbindungen, deren Siedepunkt dem der Reaktionslösung entspricht oder darüber liegt bzw. diejenigen Verbindungen, die sich im Reaktionsgemisch lösen. Es genügen bereits katalytische Mengen, um die Umsetzung von primären oder sekundären Aminen mit Verbindungen der Formel I und Basen wesentlich zu beschleunigen. Eine Erklärung für die Beschleunigung der Umsetzung bei Zusatz der in Betracht kommenden Katalysatoren kann zur Zeit nicht gegeben werden. Als katalytische Mengen der in Betracht kommenden Verbindungen benötigt man etwa 0,05 bis 1, vorzugsweise 0,1 bis 0,5 Gew.-% des Katalysators, bezogen auf das Gesamtvolumen der Reaktionslösung. Der Katalysator wird zweckmäßig der kalten Reaktionslösung zugesetzt, kann aber auch nach dem Erhitzen der Komponenten auf die Reaktionstemperatur der Mischung hinzugefügt werden. Eine andere Möglichkeit besteht darin, den Katalysator gelöst in Natronlauge bzw. gelöst in Aminoalkylschwefelsäureester dem Reaktionsgemisch zuzusetzen.

Bei Verwendung der obengenannten Katalysatoren, die entweder allein oder in Mischung miteinander eingesetzt werden können, gelingt es beispielsweise, die Reaktionsdauer für die Aminoalkylierung mittels 2-Aminoäthylschwefelsäureester und Natronlauge von 70 auf 7 Stunden, also etwa um das 10fache, zu senken.

Nach dem erfindungsgemäßen Verfahren erhält man Polyalkylenpolyamine, die primären, sekundären und mit zunehmender Molekülgröße auch tertiären Stickstoff enthalten. So läßt sich beispielsweise durch Umsetzung von 1 Mol Äthylendiamin mit 2 Mol 2-Aminoäthylschwefelsäureester ein Polyalkylenpolyamin herstellen, das 4 Stickstoffatome enthält. Die Reaktion kann mit Hilfe folgender Gleichung beschrieben werden:

$$H_2N-CH_2CH_2-NH_2 + 2\,H_2N-CH_2CH_2-OSO_3H + 4\,NaOH$$

$$\longrightarrow 2\,Na_2SO_4 + 4\,H_2O + H_2N-CH_2CH_2-NH-CH_2CH_2-NH-CH_2CH_2-NH_2 \qquad (2)$$

Die Stickstoffanalyse des Polyalkylenpolyamins ergab ca. 60% primären Stickstoff, ca. 40% sekundären und ca. 0,9% tertiären Stickstoff. Verwendet man dagegen auf 1 Mol Äthylendiamin 4 Mol 2-Aminoäthylschwefelsäureester, so erhält man ein Polyalkylenpolyamin, das 50% primären Stickstoff, ca. 32% sekundären Stickstoff und ca. 26% tertiären Stickstoff enthält. Dieses Polyalkylenpolyamin enthält dann 6 Stickstoffatome. Es handelt sich hierbei um eine Mischung verschiedener Polyalkylenpolyamine.

Setzt man bei der Polyaminoalkylierung des Äthylendiamins den 2-Aminoäthylschwefelsäureester in noch höherer Menge ein, so erhält man Produkte, die bezüglich der Bindung des Stickstoffs schwierig zu analysieren sind, so daß keine exakte Konstitutionsformel mehr angegeben werden kann. Der zunehmend höhere Polymerisationsgrad wird hier zweckmäßig mit Hilfe der Viskosität beschrieben. So hat beispielsweise ein polyaminoäthyliertes Äthylendiamin, zu dessen Herstellung man ein Molverhältnis von Äthylendiamin zu 2-Aminoäthylschwefelsäureester von 1 : 35 gewählt hat, in 50%iger wäßriger Lösung einer Viskosität von 500 mPa sec, bei einem Molverhältnis von 1 : 100 eine Viskosität von 800 mPa sec und bei einem Molverhältnis von 1 : 500 eine Viskosität von 3000 mPa sec.

Im Gegensatz dazu erhält man durch Umsetzung von Äthylendiamin mit reinem Äthylenimin unter Beibehaltung derselben Molverhältnisse völlig andere Werte für die Viskosität der 50%igen wäßrigen Polyalkylenpolyaminlösungen. Auch ein Vergleich eines Polyalkylenpolyamins, das 37 Stickstoffatome enthält und einmal durch Umsetzung von 1 Mol Äthylendiamin mit 35 Mol 2-Aminoäthylschwefelsäureester und zum anderen durch Umsetzung von 1 Mol Äthylendiamin mit 35 Mol Äthylenimin hergestellt wurde, ergibt neben anderen Viskositäten auch andere Gehalte an primärem, sekundärem und tertiärem Stickstoff, wie der folgenden Tabelle entnommen werden kann.

Tabelle
1 Mol Äthylendiamin umgesetzt mit

| | | |
|---|---|---|
| a) | 35 Mol 2-Aminoäthylschwefelsäureester | |
| | N primär | 7,2% |
| | N sekundär | 5,9% |
| | N tertiär | 4,1% |
| | Viskosität der 50%igen wäßrigen Lösung | 600 mPa · sec Broockfield |
| | | 830 mPa · sec Höppler |
| b) | 35 Mol Äthylenimin | |
| | N primär | 4,9% |
| | N sekundär | 4,6% |
| | N tertiär | 3,5% |
| | Viskosität der 50%igen wäßrigen Lösung | 450 mPa · sec Broockfield |
| | | 450 mPa · sec Höppler |

Das erfindungsgemäße Verfahren kann kontinuierlich und diskontinuierlich durchgeführt werden. In Abhängigkeit vom Aminoalkylierungsgrad, d. h. dem Verhältnis von Amin zu den Verbindungen der Formel I, erhält man Polyalkylenpolyamine, deren Konsistenz in wasserfreiem Zustand von dünnflüssig über zähflüssig bis fest variiert. Solche Polyamine finden je nach Viskosität auf den verschiedensten Gebieten Verwendung. So dienen beispielsweise Oligoamine, die 4 bis 8 Stickstoffatome enthalten, als Mineralölhilfsmittel, z. B. Additive für Motorenöle, ferner als Epoxyhärter und als Ausgangsprodukte zur Herstellung von Hilfsmitteln für die Papierindustrie. Die höheren Amine werden ebenfalls entweder direkt in Form von wäßrigen Lösungen oder auch nach Vernetzung mit Hilfe von polyfunktionellen Verbindungen in der Papierindustrie als Retentions- und Entwässerungshilfsmittel eingesetzt. Sie finden außerdem als Zwischenprodukt zur Herstellung von Flockungsmitteln für Feststoffe in Abwässern, als Haftverankerungsmittel für hydrophobe Schichten auf Papier, Zellglas und Aluminiumfolien Verwendung. Zur Bekämpfung des Algen-, Bakterien- und Pilzwachstums in wäßrigen Systemen, als Antistatiku, Textilhilfsmittel, Rostschutzmittel und Hilfsmittel in der Galvanotechnik sind als weitere Einsatzgebiete der nach dem erfindungsgemäßen Verfahren hergestellten Produkte anzusehen.

Die Erfindung wird anhand der folgenden Beispiele näher erläutert. Die in den Beispielen angegebenen Teile und Prozente beziehen sich auf das Gewicht.

## Beispiel 1

In einen 6-l-Vierhalskolben, der mit Rührer, Rückflußkühler und Thermometer ausgestattet ist, gibt man unter guter Durchmischung 3840 Teile (24 Mol) 25%ige Natronlauge, 1692 Teile (12 Mol) 98%igen 2-Aminoäthylschwefelsäureester und 36 Teile (0,6 Mol) Äthylendiamin. Der Kolbeninhalt kühlt sich

zunächst von 25 auf 15° C ab, wobei der 2-Aminoäthylschwefelsäureester in Lösung geht. Dann erhitzt man die Mischung im Verlauf von etwa 1 Stunde zum Sieden. Der Siedepunkt des Gemisches liegt zwischen 96 bis 105° C. Die Reaktion ist nach 65 Stunden bei Rückflußsieden der Mischung beendet. Der Kolbeninhalt wird anschließend unter Rühren auf eine Temperatur in dem Bereich von 30 bis 35° C abgekühlt. Dann wird der Rührer abgestellt, so daß das Reaktionsgemisch sedimentieren kann. Nach etwa 5 Minuten hat sich das Natriumsulfat am Boden des Kolbens abgesetzt und die wäßrige Phase in zwei Schichten getrennt. Die obere, Polyalkylenpolyamine enthaltende Schicht wird abgetrennt. Diese Phase besteht aus 400 Teilen (35%) Polyalkylenpolyaminen, 894 Teilen (64%) Wasser und 14 Teilen (1%) Natriumsulfat.

Die untere, wäßrige Phase enthält 1986 Teile (71%) Wasser, 700 Teile (25%) Natriumsulfat und 52 Teile (1,85%) Polyamin. 986 Teile Natriumsulfat liegen als Bodenkörper vor. Die Ausbeute an Polyalkylenpolyamin in der abgetrennten oberen Phase beträgt 90,5% der Theorie.

## Beispiel 2

Anstelle des in Beispiel 1 angegebenen 2-Aminoäthylschwefelsäureesters setzt man 12 Mol der Verbindung der Formel

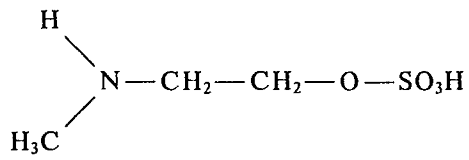

ein. Die Bedingungen entsprechen denen im Beispiel 1. Die Reaktion ist nach 70 Stunden beendet. Zu diesem Zeitpunkt ist mit $\gamma$-4-Nitrobenzylpyridin kein Aziridinring mehr nachweisbar. Es bildet sich eine obere wäßrige Phase aus, die 36% Polyamine enthält. Der Natriumsulfatgehalt dieser oberen Phase beträgt 1,2%. Die untere wäßrige Phase enthält 26% Natriumsulfat und 1,5% Polyalkylenpolyamin. Die Ausbeute an Polyalkylenpolyamin in der oberen Schicht beträgt 92% der Theorie.

## Beispiel 3

Beispiel 1 wird mit der Ausnahme wiederholt, daß man anstelle von 2-Aminoäthylschwefelsäureester 12 Mol der Verbindung der Formel

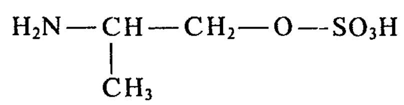

einsetzt. Die Umsetzung ist nach etwa 90 bis 100 Stunden beendet. Nach dieser Zeit ist mit $\gamma$-4-Nitrobenzylpyridin kein Aziridin mehr nachweisbar. Nach dem Sedimentieren des Reaktionsgemisches erhält man eine obere wäßrige Phase die sich aus einer 38%igen wäßrigen Lösung von Polyalkylenpolyaminen und 1% Natriumsulfat zusammensetzt. Die untere wäßrige Phase enthält 25% Natriumsulfat und 1,2% Polyalkylenpolyamin. In der oberen wäßrigen Phase befinden sich 93% der theoretisch möglichen Menge an Polyalkylenpolyamin.

## Vergleichsbeispiel 1

Verfährt man wie in Beispiel 1 beschrieben, setzt jedoch anstelle von 25%iger wäßriger Natronlauge eine 12,5%ige Natronlauge ein, so fällt nach beendeter Reaktion und nach dem Abkühlen kein Natriumsulfat aus. Das Reaktionsgemisch trennt sich außerdem nicht in zwei Phasen.

## Vergleichsbeispiel 2

Beispiel 1 wird mit der Ausnahme wiederholt, daß anstelle von 25%iger wäßriger Natronlauge eine 50%ige wäßrige Natronlauge verwendet wird. Auch hier trennt sich das Reaktionsgemisch nach dem Abkühlen und Sedimentieren des Natriumsulfats nicht in zwei Schichten.

Beispiel 6

Das Beispiel 1 wird im wesentlichen wiederholt, jedoch die im Beispiel 1 erhaltene untere wäßrige Phase im Kreislauf geführt. Man verfährt dabei so, daß man die im Beispiel 1 erhaltene untere wäßrige Phase vorlegt, 1230 Teile 2-Aminoäthylschwefelsäureester, 700 Teile 100%ige Natronlauge (entspricht einer 25%igen wäßrigen Natronlauge im Reaktionsgemisch) und 26 Teile Äthylendiamin zugibt. Das Reaktionsgemisch wird dann, wie im Beispiel 1 beschrieben, auf Siedetemperatur erhitzt und 65 Stunden bei dieser Temperatur gehalten. Nach dieser Zeit ist mit Hilfe von $\gamma$-4-Nitrobenzylpyridin kein Aziridin mehr nachweisbar. Das Reaktionsgemisch wird dann unter Rühren auf eine Temperatur in dem Bereich von 30 bis 35°C abgekühlt. Dann läßt man das Reaktionsgemisch sedimentieren und trennt die erhaltene obere Phase ab. Sie besteht aus 396 Teilen (36%) Polyäthylenpolyamin, 693 Teilen (63%) Wasser und 11 Teilen (1%) Natriumsulfat. Die untere Phase enthält 1607 Teile (71%) Wasser, 612 Teile (27%) Natriumsulfat und 45 Teile (2%) Polyäthylenpolyamin. 1317 Teile Natriumsulfat haben sich auf dem Boden des Gefäßes abgeschieden. Die Ausbeute an Polyäthylenpolyamin beträgt 98,5% der Theorie.

Beispiel 7

Beispiel 6 wird wiederholt, jedoch gibt man zum Reaktionsgemisch zusätzlich noch 0,1% 1,2-Dichlorpropan als Katalysator hinzu. Der Katalysator wird der kalten Reaktionslösung zugesetzt. Die Reaktion ist nach 10 Stunden beendet. Es ist dann mit $\gamma$-4-Nitrobenzylpyridin kein Aziridin mehr nachzuweisen. Die Aufarbeitung des Reaktionsgemisches erfolgt in der im Beispiel 6 angegebenen Weise, die Ausbeute an Polyamin und die Verteilung des Polyamins in den Schichten entspricht der im Beispiel 6 angegebenen.

Beispiel 8

Man verfährt im Prinzip wie im Beispiel 6 beschrieben, führt jedoch Teile der unteren Phase eines Ansatzes mit 36%iger Natronlauge im Kreislauf. Dazu gibt man 1440 Teile 100%ige Natronlauge (36 Mol) (entspricht einer 36%igen wäßrigen Natronlauge im Reaktionsgemisch), 2540 Teile 2-Aminoäthylschwefelsäureester (18 Mol) und 54 Teile (0,9 Mol) Äthylendiamin. Als Katalysator wird 0,1% Saccharose zugesetzt. Die Reaktion ist nach 11 Stunden beendet. Das Reaktionsgemisch wird auf eine Temperatur von 30°C unter Rühren gekühlt. Dann stellt man den Rührer ab und läßt das Reaktionsgemisch sedimentieren. Die Phasentrennung ist nach 3 Minuten beendet. Die obere Phase besteht aus 810 Teile (36%) Polyäthylenpolyamin, 1400 Teilen (63%) Wasser und 22 Teilen (1%) Natriumsulfat. Die untere Phase enthält 1485 Teile (75%) Wasser, 400 Teile (21%) Natriumsulfat und 74 Teile (3,7%) Polyäthylenpolyamin. 3014 Teile Natriumsulfat liegen als Bodenkörper vor. Die Ausbeute an Amin in der abgetrennten oberen wäßrigen Phase beträgt 99,5% der Theorie.

Beispiel 9

In einem Rührkessel von 150 l Inhalt wird eine Mischung aus 30 Teilen 2-Aminoäthylschwefelsäureester, 17 Teilen Natronlauge 100%ig, 31 Teilen Wasser, 0,6 Teilen Äthylendiamin und 0,1 Teile (entspricht 0,1%) Äthylenchlorid vorgelegt. Die Reaktionskomponenten werden unter kräftiger Durchmischung zum Sieden erhitzt. Die Reaktion ist nach 10 Stunden beendet. Das Reaktionsgemisch wird dann unter weiterem Mischen auf eine Temperatur von 30°C abgekühlt. Dann läßt man es sedimentieren und erhält nach 10 Minuten zwei Schichten. Die obere Phase wird abgetrennt. Sie besteht aus 9,4 Teilen eines Polyamingemisches, 0,14 Teilen Natriumsulfat und 13,6 Teilen Wasser. Die untere Phase besteht aus 25,4 Teilen Wasser, 8,6 Teilen Natriumsulfat und 1,4 Teilen eines Polyamingemisches. Die Ausbeute an Polyamin beträgt 98% der Theorie.

Beispiel 10

Man verfährt wie im Beispiel 9 angegeben, verwendet jedoch anstelle von Äthylendiamin 0,61 Teile Äthanolamin. Die Reaktion ist nach 9 1/2 Stunden beendet. Die Zusammensetzung der oberen und unteren wäßrigen Phase entspricht der im Beispiel 9 angegebenen. Die Ausbeute beträgt etwa 99% der Theorie.

Beispiel 11

Man verfährt wie im Beispiel 9 angegeben, verwendet jedoch anstelle von Äthylendiamin 2,3 Teile Anilin. Die Reaktion ist nach 6 Stunden beendet. Ca. 97% des Polyamines trennen sich als obere Phase mit einem Wassergehalt von 61% und einem Natriumsulfatgehalt von 0,8% ab.

Beispiel 12

Man verfährt wie im Beispiel 9 angegeben, verwendet jedoch anstelle von Äthylendiamin 0,8 Teile Hydrazin. Die Reaktion ist nach 8 Stunden beendet. Die Zusammensetzung der oberen Polyminphase entspricht etwa der in Beispiel 11.

Beispiel 13

Man verfährt wie im Beipsiel 9 angegeben, verwendet jedoch anstelle von Äthylendiamin 1,5 Teile Harnstoff. Die Reaktion ist nach 12 Stunden beendet. Ca. 96% des aminoäthylierten Harnstoffs trennen sich als obere Phase mit einem Wassergehalt von 66% und einem Sulfatgehalt von 1,2% ab.

Beispiel 14

Man verfährt wie im Beispiel 9 angegeben, verwendet jedoch anstelle von Äthylendiamin 2,18 Teile Morpholin. Die Zusammensetzung der Oberphase entspricht etwa der in Beispiel 11.

Beispiel 15

Man verfährt wie in Beispiel 9 angegeben, verwendet jedoch anstelle von Äthylendiamin 1,35 Teile Glycin-Na-Salz. Es trennen sich 94% des aminoäthylierten Glycins als Oberphase mit einem Natriumsulfatgehalt von 1,2% und einem Wassergehalt von 68% ab.

**Patentansprüche**

1. Verfahren zur Herstellung von Polyalkylenpolyaminen durch Umsetzung von primären oder sekundären Aminen mit Verbindungen der Formel

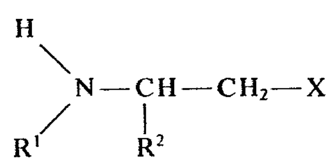

(I)

in der

X $=$ $-Cl$, $-Br$ oder $-OSO_3H$,
$R^1$, $R^2 =$ H oder einen gesättigten Alkylrest mit 1 bis 4 C-Atomen bedeuten,

und, bezogen auf die Verbindungen der Formel I, mit mindestens stöchiometrischen Mengen an Basen in wäßriger Lösung, wobei man 15 bis 45%ige wäßrige Lösungen von Alkali- oder Erdalkalihydroxiden als Basen einsetzt und die Reaktion bei Temperaturen von 60 bis 200°C durchführt, dadurch gekennzeichnet, daß man das Reaktionsgemisch unter Mischen auf eine Temperatur abkühlt, bei der sich zwei Phasen ausbilden, und die obere, Polyalkylenpolyamine enthaltende Phase abtrennt.

2. Verfahren gemäß Anspruch 1, dadurch gekennzeichnet, daß die wäßrigen Lösungen der Alkali- oder Erdalkalihydroxide mit Natriumsulfat gesättigt sind.

3. Verfahren gemäß den Ansprüchen 1 und 2, dadurch gekennzeichnet, daß man die Umsetzung beim Siedepunkt des Reaktionsgemisches durchführt.

4. Verfahren gemäß den Ansprüchen 1 bis 3, dadurch gekennzeichnet, daß man die Umsetzung in Gegenwart von Verbindungen vornimmt, die die Polymerisation von Alkyleniminen initiieren.

5. Verfahren gemäß Anspruch 4, dadurch gekennzeichnet, daß man katalytische Mengen von Verbindungen einsetzt, die die Polymerisation von Alkyleniminen initiieren.

6. Verfahren gemäß Anspruch 5, dadurch gekennzeichnet, daß man als Polymerisationsinitiatoren halogenierte Kohlenwasserstoffe verwendet.

## Claims

1. A process for the manufacture of polyalkylenepolyamines by reacting a primary or secondary amine with a compound of the formula

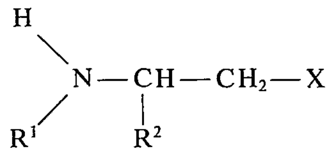

(I)

where X is $-Cl$, $-Br$ or $-OSO_3H$ and $R^1$ and $R^2$ are H or saturated alkyl of 1 to 4 carbon atoms, and with at least the stoichiometric amount, based on the compound of the formula I, of a base in aqueous solution, an aqueous solution, of from 15 to 45 per cent strength, of an alkali metal hydroxide or alkaline earth metal hydroxide being used as the base, and the reaction being carried out at a temperature of from 60° to 200°C, characterized in that the reaction mixture is cooled, while being mixed, to a temperature at which 2 phases form, and the upper phase containing polyalkylenepolyamines is separated off.

2. A prozess as claimed in claim 1, characterized in that the aqueous solution of the alkali metal hydroxide or alkaline earth metal hydroxide ist saturated with sodium sulfate.

3. A process as claimed in claims 1 and 2, characterized in that the reaction ist carried out at the boiling point of the reaction mixture.

4. A process as claimed in claims 1 to 3, characterized in that the reaction is carried out in the presence of a compound which initiates the polymerization of alkyleneimines.

5. A process as claimes in claim 4, characterized in that a catalytic amount of a compound which initiates the polymerization of alkyleneimines is used.

6. A process as claimed in claim 5, characterized in that a halohydrocarbon is used as the polymerization initiator.

## Revendications

1. Procédé de préparation de polyalkylènepolyamines par réaction d'amines primaires ou secondaires avec des composés de formule

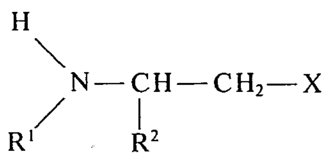

(I)

dans laquelle

X représente $-Cl$, $-Br$ ou $-OSO_3H$
$R^1$, $R^2$ représentent H ou un reste alkyle saturé à 1 à 4 atomes de C,

et avec des quantités au moins stoechiométriques, rapportées aux composés de formule I, de bases en solution aqueuse, en faisant réagir, comme bases, des solutions aqueuses à 15 à 45% d'hydroxydes alcalins ou alcalino-terreux et en effectuant la réaction à des températures de 60 à 200°C, caractérisé par le fait que l'on refroidit le mélange réactionnel, en mélangeant, à une température à laquelle se forment deux phases et on sépare la phase supérieure contenant de la polyalkylènepolyamine.

2. Procédé selon la revendication 1, caractérisé par le fait que les solutions aqueuses des hydroxydes alcalins ou alcalino-terreux sont saturées avec du sulfate de sodium.

3. Procédé selon l'une des revendications 1 et 2, caractérisé par le fait que l'on effectue la réaction au point d'ébullition du mélange réactionnel.

4. Procédé selon l'une des revendications 1 à 3, caractérisé par le fait que l'on effectue la réaction en présence de composés qui initient la polymérisation d'alkylènimines.

5. Procédé selon la revendication 4, caractérisé par le fait que l'on introduit des quantités catalytiques de composés qui initient la polymérisation d'alkylènimines.

6. Procédé selon la revendication 5, caractérisé par le fait que l'on utilise, comme initiateurs de polymérisation, des hydrocarbures halogénés.